# EUROPEAN PATENT APPLICATION

(11) **EP 3 162 221 A1**
(43) Date of publication of application: **03.05.2017**
(21) Application number: 15815893.1
(22) Date of filing: 15.04.2015
(51) Int. Cl.: A23K 50/00

(54) **METHOD FOR MANUFACTURING GRANULAR PET FOOD**

(30) Priority: 30.06.2014 JP 2014134947
(71) Applicant: Unicharm Corporation, Ehime 799-0111 (JP)
(72) Inventor: MIYAMOTO Katsunori, Itami-shi Hyogo 664-0831 (JP); INOUE Kazunori, Itami-shi Hyogo 664-0831 (JP)
(74) Representative: Peter, Julian
(86) International application number: PCT/JP2015/061619
(87) International publication number: WO 2016/002301

(57) **Abstract**

A method of producing granular pet food including a step of granulating food granules; and a step of adhering a coating solution that contains water, oils and fats, a palatability enhancer, and an emulsifier to the food granules.

## Description

### Technical Field

The present inveniton relates to a method of producing granular pet food.

Priority is claimed on Japanese Patent Application No. 2014-134947, filed on June 30, 2014, the content of which is incorporated herein by reference.

### Background Art

A technique of coating food granules with oils and fats or a palatability enhancer for the purpose of improving palatability of pet food is known. For example, PTL 1 discloses a method of heating and mixing food granules with oils and fats having high boiling point oils and fats and low boiling point oils and fats and powdery external additives to form a powdery external additive layer on the surface of a food granule. PTL 2 discloses a method of coating the surface of a food granule with oils and fats in a solid state at room temperature and then coating the surface thereof with a powdery palatability enhancer.

### Citation List

### Patent Literature

[PTL 1] Japanese Unexamined Patent Application, First Publication No. 2007-330180
[PTL 2] Japanese Unexamined Patent Application, First Publication No. 2010-166853

### Summary of Invention

### Technical Problem

However, in the methods of PTLs 1 and 2, since the powdery palatability enhancer layer is formed on the outermost surface of a food granule, the powdery palatability enhancer may fall off from a food granule during conveyance of pet food. Further, in the methods of PTLs 1 and 2, when the amount of a palatability enhancer is increased in order to further improve the palatability, another layer of a powdery palatability enhancer is laminated on the powdery palatability enhancer layer formed on the outermost surface of a food granule so that the powdery palatability enhancer layer on the outermost layer of a food granule may be peeled off and fall off therefrom during the conveyance of pet food. Due to the fall off of the powdery palatability enhancer, there are problems in that the production line of a factory is contaminated and pet food with satisfactory palatability is not obtained.

The present invention has been made in consideration of the above-described circumstances, and an object thereof is to provide a method of producing granular pet food in which a palatability enhancer is unlikely to fall off from food granules and which has satisfactory palatability.

### Solution to Problem

The present invention is as follows.
(1) A method of producing granular pet food including: a step of granulating food granules; and a step of adhering a coating solution that contains water, oils and fats, a palatability enhancer, and an emulsifier to the food granules.
(2) The method of producing granular pet food according to (1), in which the mass of oils and fats is greater than the mass of water in the coating solution, and an HLB of the emulsifier is less than 8.
(3) The method of producing granular pet food according to (1) or (2), in which the emulsifier contains polyglycerin ester.
(4) The method of producing granular pet food according to (3), in which the polyglycerin ester is polyglycerin polyricinoleate.
(5) The method of producing granular pet food according to any one of (1) to (4), in which the mass ratio of water to oils and fats in the coating solution is in a range of 1:2 to 1:10.
(6) The method of producing granular pet food according to any one of (1) to (5), in which the hardness of water is 120 mg/L or less.
(7) The method of producing granular pet food according to any one of (1) to (6), further including: a step of adhering a powdery palatability enhancer to the food granules after the coating solution is adhered to the food granules.

### Advantageous Effects of Invention

According to the present embodiment, it is possible to provide granular pet food in which a palatability enhancer is unlikely to fall off from food granules and which has satiafactory palatability.

### Description of Embodiments

In the present specification, the term "pet" indicates an animal that has been bred by a person. In a narrower sense, a pet is an animal cared for by the owner. In addition, the "pet food" indicates feed for pets. The pet food of the present embodiment can be sold as the "feed for animals" or "food for animals."

The "palatability" in the present specification is an index of whether pet food is favored and eaten by a pet and the texture and/or taste thereof attributes to the palatability. For example, any of or both of the texture and taste thereof may attribute to the palatability.

In the present specification, the "coating" of food granules with a solution means that the solution is applied to the surface of a food granule so as to adhere to the surface of the food granule and includes a case where food granules are infiltrated by a part or the entirety of the applied solution.

In the present specification, the "coating" of food granules with powder means that powder is applied to the surface of a food granule so as to adhere to the surface of the food granule.

### <Raw ingredients>

Raw ingredients of food granules are not particularly limited as long as the raw ingredients can be used as feed and known raw ingredients used for producing pet food can be used. Examples thereof include cereals (such as corn, wheat, and rice), beans (such as whole soybeans), vegetable protein (such as corn gluten meal and soybean protein), meat (such as chicken, beef, pork, venison, or meals (such as chicken meal and pork meal)), seafood (such as fish and meals (fish meal)), vegetables, additives (such as vitamins, minerals, an amino acid, flavoring raw ingredients, fibers, colorants, and palatability enhancers), and external additives (oils and fats and palatability enhancers). The meals indicate powder products obtained by compressing and finely grinding meat or seafood.

The external additives indicate components to be added (externally added) to a raw ingredient mixture after being formed in a granular shape.

In the present embodiment, it is preferable that external additives such as oils and fats and a palatability enhancer are added to the raw ingredient mixture as a coating solution.

### <Coating solution>

The coating solution of the present embodiment contains water, oils and fats, a palatability enhancer, and an emulsifier.

The hardness of water is not particularly limited, but there is a concern that emulsification of minerals in water using an emulsifier may be inhibited when water having a high hardness is used. Therefore, the hardness of water used for the coating solution is preferably 120 mg/L or less, more preferably 100 mg/L or less, and still more preferably 90 mg/L or less. In a case where the hardness of water is in the above-described range, oils and fats and water in the coating solution are easily and more stably emulsified.

The amount of water is not particularly limited, but water activity is increased so that the management of granular pet food becomes problematic when the amount of water in the coating solution is extremely large. In the present embodiment, the amount of water is preferably in a range of 5% to 40% by mass, more preferably in a range of 10% to 30% by mass, and still more preferably in a range of 10% to 25% by mass with respect to the amount of the coating solution. When the amount of water is in the above-described range, a palatability enhancer is more easily dispersed in the coating solution and granular pet food with satisfactory palatability is easily obtained.

The oils and fats may be vegetable oils and fats or animal oils and fats. The oils and fats may be used alone or in combination of two or more kinds thereof. As the oils and fats, oils and fats in a liquid state at room temperature or oils and fats in a solid state at room temperature may be used. In order to prepare oils and fats in a liquid state, oils and fats are heated for use as necessary.

From the viewpoint of easily obtaining high palatability, it is preferable that the oils and fats include animal oils and fats. Examples of the animal oils and fats include chicken oil, lard, beef tallow (fat), and milk fats and oils. The animal oils and fats may be used alone or in combination of plural kinds thereof.

The amount of oils and fats is preferably in a range of 50% to 95% by mass, more preferably in a range of 55% to 90% by mass, and still more preferably in a range of 60% to 85% by mass with respect to the amount of the coating solution. Further, from the viewpoint of improving dispersibility of a palatability enhancer in the coating solution, it is preferable that the mass of oils and fats is greater than the mass of water in the coating solution. Specifically, the mass ratio of water to oils and fats in the coating solution is preferably in a range of 1:2 to 1:10, more preferably in a range of 1:2 to 1:9, and still more preferably in a range of 1:2 to 1:8. When the amount of water in the coating solution is set to be less than or equal to the upper limit of the range described above, a problem of degradation in storability of the coating solution due to an increase in water activity of the coating solution tends to be reduced. Meanwhile, when the amount of water in the coating solution is set to be greater than or equal to the lower limit of the range described above, an increase in viscosity of the coating solution (for example, a case where the viscosity of an aqueous solution in which a palatability enhancer is dissolved is increased so that the solution becomes paste-like) tends to be reduced and thus food granules are easily coated with the coating solution.

As a palatability enhancer, at least one selected from the group consisting of an animal raw ingredient enzyme decomposer, a vegetable raw ingredient enzyme decomposer, and a yeast extract can be used.

Examples of the animal raw ingredient enzyme decomposer include an enzyme decomposer of chicken, an enzyme decomposer of chicken liver, an enzyme decomposer of port, an enzyme decomposer of pork liver, an enzyme decomposer of beef, an enzyme decomposer of beef liver, and an enzyme decomposer of seafood.

Examples of the vegetable raw ingredient enzyme decomposer include an enzyme decomposer of beans (soybean and the like) and an enzyme decomposer of tubers and roots (potatoes and the like).

Examples of the yeast extract include a brewer's yeast extract, a baker's yeast extract, and a torula yeast extract.

An animal raw ingredient enzyme decomposer is preferable and an enzyme decomposer of chicken liver (hereinafter, also referred to as a chicken extract) is particularly preferable from the viewpoint of easily obtaining high palatability with a relatively low cost.

The palatability enhancer may be used alone or in combination of two or more kinds thereof.

The amount of the palatability enhancer is preferably in a range of 1% to 20% by mass, more preferably in a range of 2% to 15% by mass, and still more preferably in a range of 3% to 10% by mass with respect to the amount of the coating solution.

The emulsifier is not particularly limited, but an emulsifier having an HLB of less than 8 is preferable from the viewpoint of improving the dispersibility of the palatability enhancer in the coating solution.

From the viewpoint of preventing degradation in adhesiveness of the coating solution to food granules due to an increase in viscosity of the coating solution, it is preferable that the emulsifier contains polyglycerin ester. Examples of the polyglycerin ester include polyglycerin polyricinoleate and polyglycerin fatty acid ester.

Among these, from the viewpoint of acid resistance, polyglycerin polyricinoleate is particularly preferable in a case where an acid (for example, DL-malic acid or the like as a pH adjusting agent) is added to the coating solution as an optional component.

The emulsifier may be used alone or in combination of two or more kinds thereof.

The amount of the emulsifier is preferably in a range of 0.1% to 3% by mass, more preferably in a range of 0.3% to 2% by mass, and still more preferably in a range of 0.5% to 1.5% by mass with respect to the amount of the coating solution.

In the present embodiment, the coating solution may contain optional components other than those described above. Examples of the optional components include additives such as vitamins, minerals, an amino acid, an organic acid, flavor raw ingredients, fibers, a colorant, a palatability enhancer, a preservative, and a pH adjusting agent (for example, DL-malic acid).

In the present embodiment, the amount of the coating solution is preferably in a range of 1% to 10% by mass, more preferably in a range of 2% to 9% by mass, and still more preferably in a range of 3% to 8% by mass with respect to the total amount of granular pet food (also including external additives such as a powdery palatability enhancer).

The amount of water in the coating solution is preferably in a range of 0.2% to 1.2% by mass, more preferably in a range of 0.4% to 1.0% by mass, and still more preferably in a range of 0.6% to 0.8% by mass with respect to the total amount of granular pet food (also including external additives such as a powdery palatability enhancer).

The amount of oils and fats in the coating solution is preferably in a range of 0.6% to 8% by mass, more preferably in a range of 1% to 7% by mass, and still more preferably in a range of 2% to 5% by mass with respect to the total amount of granular pet food (also including external additives such as a powdery palatability enhancer).

The amount of the palatability enhancer in the coating solution is preferably in a range of 0.05% to 0.6% by mass, more preferably in a range of 0.1% to 0.5% by mass, and still more preferably in a range of 0.2% to 0.4% by mass with respect to the total amount of granular pet food (also including external additives such as a powdery palatability enhancer).

The amount of the emulsifier in the coating solution is preferably in a range of 0.01% to 0.07% by mass, more preferably in a range of 0.02% to 0.06% by mass, and still more preferably in a range of 0.03% to 0.05% by mass with respect to the total amount of granular pet food (also including external additives such as a powdery palatability enhancer).

### <Method of producing granular pet food>

A method of producing granular pet food according to the present embodiment includes a process of granulating food granules (hereinafter, also referred to as a "forming process") and a process of adhering the coating solution to the food granules (hereinafter, also referred to as a "coating process").

### <Forming process>

A method of forming a raw ingredient mixture in a granular shape may be a method of obtaining puffed granules by performing a puffing process or a method of obtaining non-puffed granules without performing a puffing process.

The "puffing process" indicates a process of generating a gas in the inside of the raw ingredient mixture using a technique of carrying out heating, fermentation, a chemical reaction, or pressure reduction. In the puffing process, when a gas is generated, the volume of the raw ingredient mixture is increased so as to have porous properties. Further, when the volume of the raw ingredient mixture is increased, the bulk density thereof is decreased. Before, after, or at the same time with the puffing process, puffed granules are obtained by forming the raw ingredient mixture in a granular shape.

Examples of the method of obtaining non-puffed granules include a method of extruding and forming granules without puffing and a method of performing diecutting processing.

It is preferable that the forming process of the present embodiment is performed using a method that includes a puffing process. Since puffed granules are porous, the amount of the coating solution adhering to food granules is easily increased and thus an excellent coating state is easily obtained. A method of producing puffed granules will be described below.

In the forming process, it is preferable that the raw ingredient mixture is subjected to a heat treatment. It is preferable that the heat treatment is performed under conditions in which carbohydrates (starch) in the raw ingredient mixture is pregelatinized. When carbohydrates are pregelatinized, digestibility of granular pet food is improved. The temperature of the heat treatment in the forming process is preferably 150°C or lower, more preferably in a range of 50°C to 120°C, and still more preferably in a range of 80°C to 110°C. The time for the heat treatment is preferably in a range of 1 minute to 20 minutes, more preferably in a range of 2 minutes to 20 minutes, and still more preferably in a range of 2 minutes to 6 minutes. When the treatment temperature and the treatment time are respectively in the above-described range, the effects of improving digestibility resulting from pregelatinization of carbohydrates are obtained while preventing the raw ingredients from being extremely heated.

In the forming process, it is preferable that the raw ingredient mixture is formed in a granular shape and then the obtained granules are dried. As a drying method, a method of increasing the temperature of granules and drying the granules is preferable. For example, a method of drying granules by blowing hot air to the granules is preferable. From the viewpoint that the temperature of granules is easily increased in the subsequent coating process, it is preferable that the temperature of granules is increased during the drying process.

The temperature (treatment temperature) of granules at the time when the temperature of granules is highest in the drying process is preferably 140°C or lower, more preferably in a range of 60°C to 130°C, and still more preferably in a range of 80°C to 120°C. It is preferable that the drying time is set according to the treatment temperature such that the moisture content of granules after the drying process is finished is in a desired range. For example, the drying time is preferably in a range of 1 minute to 120 minutes, more preferably in a range of 5 minutes to 60 minutes, and still more preferably in a range of 10 minutes to 40 minutes.

Moreover, the temperature of the heating treatment and the temperature of the drying treatment may be the same as or different from each other.

The moisture content of granules after being dried is preferably in a range of 5% to 9.5% by mass, more preferably in a range of 6% to 9% by mass, and still more preferably in a range of 7% to 8.5% by mass.

Granules having a moisture content of 10% by weight or less are granules for so-called "dry food".

### [Method of producing puffed granules]

As a method of producing puffed granules, for example, a method of producing puffed granules using an extruder is preferable. As a method of producing puffed granules using the extruder, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; p 157 to 190) can be used.

An example of a method of producing puffed granules using the extruder will be described. First, raw ingredients other than the external additives in raw ingredients of puffed granules are ground and then mixed with each other as necessary. The raw ingredients may be mixed while being ground using a grinder. Further, a raw ingredient mixture is obtained by adding water (not included in the raw ingredient composition) thereto as necessary.

After the obtained raw ingredient mixture is put into the extruder, heated, and pressed, the mixture is extruded from an outlet. The outlet is provided with a plate in which a hole having a predetermined shape is formed and a cutter which cuts the raw ingredient mixture extruded from the plate to have a predetermined length (thickness). The raw ingredient mixture is extruded from the hole of the plate, formed in a predetermined shape by being cut with the cutter, and released to the atmospheric pressure from the pressurized state. In this manner, water vapor in the raw ingredient mixture is expanded and then the raw ingredient mixture is puffed, thereby obtaining porous granules. These granules are dried until the granules have a predetermined moisture content and then puffed granules are obtained. In this manner, puffed granules (food granules) are obtained.

The shape of food granules is not particularly limited as long as the shape is suitable for a pet to eat and any kind of shape such as a spherical shape, a polygonal shape, a cylindrical shape, a donut shape, a plate shape, a go stone shape (circular, curved tablet; oval), a heart shape, a star shape, a fish shape, or a wheel shape can be used.

Further, in regard to the size of puffed granules, the puffed granules may be small such that pets can fit all of it in their mouth or may be large such that pets can bite into the food plural times.

For example, in regard to the size of food granules, both of the shortest diameter and the longest diameter are preferably in a range of 3 to 30 mm, more preferably in a range of 6 to 16.5 mm, and still more preferably in a range of 8 to 12 mm. In regard to the shape thereof, a go stone shape in which both of the shortest diameter and the longest diameter are in a range of 3 to 30 mm is preferable, a go stone shape in which both of the shortest diameter and the longest diameter are in a range of 6 to 16.5 mm is more preferable, and a go stone shape in which both of the shortest diameter and the longest diameter are in a range of 8 to 12 mm is still more preferable.

In a case where food granules are puffed granules, the bulk density of the puffed granules is preferably in a range of 300 to 500 g/L, more preferably in a range of 330 to 480 g/L, and still more preferably in a range of 360 to 450 g/L.

### <Coating process>

Granular pet food is obtained by adhering the coating solution to food granules (preferably puffed granules) granulated in the forming process.

Examples of the method of adhering the coating solution to food granules include a method of spraying the coating solution to food granules, a method of supplying the coating solution to food granules while stirring the food granules in a container such as a tank, and a method of supplying food granules and the coating solution to a container and vibrating the container.

Further, a vacuum coating method of reducing the pressure applied to food granules in a state in which the food granules are in contact with the coating solution may be used.

The temperature of food granules at the time when food granules are coated with the coating solution is preferably in a range of 30°C to 70°C, more preferably in a range of 35°C to 60°C, and still more preferably in a range of 40°C to 50°C. The temperature of the coating solution during the coating is preferably in a range of 40°C to 50°C. When the temperature of food granules is in the above-described range, it is easy to increase the amount of the coating solution (coating amount) adhering to granules.

In the present embodiment, it is preferable that a process of adhering a powdery palatability enhancer (external additive) to the food granules is performed after the coating process. From the viewpoint of preventing the powdery palatability enhancer from falling off from food granules, it is desired that the amount of the powdery palatability enhancer is set to 1.5% by mass or less with respect to the total amount of food granules. When the amount of the powdery palatability enhancer is 1.5% by mass or less, the palatability is insufficient. However, in the present embodiment, since the coating solution containing a palatability enhancer adheres to food granules, satisfactory palatability can be already ensured. Therefore, the palatability of granular pet food can be further improved using a combination of a coating solution and a powdery palatability enhancer while prevention of the falling off of the powdery palatability enhancer from food granules is considered.

Examples of the method of adhering the powdery palatability enhancer to food granules include a method of supplying the powdery palatability enhancer to food granules while stirring the food granules in a container such as a tank and a method of supplying food granules and the powdery palatability enhancer to a container and vibrating the container.

The temperature of food granules at the time of adhering the powdery palatability enhancer to food granules is preferably in a range of 30°C to 70°C, more preferably in a range of 35°C to 60°C, and still more preferably in a range of 40°C to 50°C. At this time, the temperature of the powdery palatability enhancer is preferably in a range of 10°C to 25°C. When the temperature of food granules is in the above-described range, it is easy to increase the amount of the powdery palatability enhancer (coating amount) adhering to granules.

The amount of the powdery palatability enhancer is not particularly limited, but is preferably in a range of 0.1% to 1.5% by mass, more preferably in a range of 0.5% to 1.5% by mass, and still more preferably in a range of 1.0% to 1.5% by mass with respect to the total amount of granular pet food (also including the coating solution) from the viewpoint of preventing the falling off of the powdery palatability enhancer from food granules.

### <Granular pet food>

A predetermined amount of granular pet food obtained after the coating process is accommodated in a packaging container and the container is sealed, thereby obtaining pet food. As the packaging container, a packaging container which is capable of holding the moisture content of the pet food is used.

Further, a mixture obtained by mixing a predetermined amount of granular pet food obtained after the coating process with a predetermined amount of granular pet food which is different from the granular pet food obtained after the coating process may be accommodated in a packaging container and the packaging container may be sealed to obtain pet food. The expression "granular pet food which is different from the granular pet food" means that at least one of the composition and the shape of granular pet food is different from that of the granular pet food. Further, "granules for pet food which are different from the granules for pet food" may be granules (including small pieces) that can be used for pet food. Granules having a total moisture content of 10% by mass or less after the mixing are preferable.

In the present embodiment, a coating solution that contains water, oils and fats, a palatability enhancer, and an emulsifier adheres to food granules. Since the coating solution contains an emulsifier, a palatability enhancer is uniformly dispersed in the entire oils and fats through water. Further, since the coating solution container oils and fats, the adhesiveness of the coating solution to food granules is excellent. Therefore, when the coating solution adheres to food granules, the palatability enhancer uniformly adheres to each food granule without falling off of the palatability enhancer from food granules and thus satisfactory palatability can be obtained.

### [Examples]

Hereinafter, the present invention will be described in more detail with reference to examples, but the present invention is not limited thereto.

### <Example 1>

In the present example, beef tallow was used as oils and fats, a chicken extract was used as a palatability enhancer, and polyglycerin polyricinoleate was used as an emulsifier. A chicken extract is an enzyme decomposer of chicken liver.

Raw ingredients other than a coating solution and a powdery palatability enhancer respectively having the formulated composition listed in Table 1 were mixed together, water was added thereto, and then the mixture was further mixed.

The obtained raw ingredient mixture was put into an extruder and subjected to a heat treatment in a temperature range of 80°C to 110°C for approximately 2.5 minutes so that starch components were pregelatinized, and food granules were puffed at the same time with being extruded and formed in a granular shape at an outlet of the extruder. The conditions of the extrusion and formation were set such that the puffed granules had a circular tablet shape with a diameter of 9 mm and a height (thickness) of 6 mm.

The obtained granules were subjected to a drying treatment at approximately 120°C or 15 minutes using a drier, thereby obtaining puffed granules.

The puffed granules after the drying treatment were coated with a coating solution and a powdery palatability enhancer according to the following method. The compositions of the coating solution and the powdery palatability enhancer in the entire granular pet food are listed in Table 1 and the compositions of respective components in the coating solution are listed in Table 2.

First, the coating solution (at approximately 45°C) was added to puffed granules (at approximately 45°C) immediately after the drying treatment and the puffed granules and the coating solution were mixed with each other so that the surface of a granule was coated with the coating solution. The surface of a puffed granule was soaked with a part of the coating solution.

Next, a chicken extract, as a powdery palatability enhancer, was added to and mixed with the granules (at approximately 45°C) coated with the coating solution so that the granules were coated with the chicken extract, thereby obtaining granular pet food 1.

### <Example 2>

Puffed granules were obtained in the same manner as in Example 1 except that the formulated composition listed in Table 1 was used. Puffed granules after the drying treatment were coated with the coating solution and the powdery palatability enhancer using the same method as in Example 1, thereby obtaining granular pet food 2. The compositions of the coating solution and the powdery palatability enhancer in the entire granular pet food are listed in Table 1 and the compositions of respective components in the coating solution are listed in Table 2.

**[Table 1]**

| | | | Example 1 | Example 2 |
|---|---|---|---|---|
| Composition of raw ingredient (% by mass) | Raw ingredient mixture | Cereals (corn and wheat) | 45.000 | 50.000 |
| | | Animal protein | 20.000 | 27.000 |
| | | Vegetable protein | 17.000 | 7.000 |
| | | Other additives | 10.365 | 11.365 |
| | Total amount | | 92.365 | 95.365 |
| | Coating solution | Water | 0.700 | 0.700 |
| | | Beef tallow | 5.000 | 2.000 |
| | | Chicken extract | 0.200 | 0.200 |
| | | Polyglycerin polyricinoleate | 0.035 | 0.035 |
| | | Other additives | 0.200 | 0.200 |
| | Powdery palatability enhancer | Chicken extract | 1.500 | 1.500 |
| | Total amount | | 100.000 | 100.000 |

**[Table 2]**

| | | Example 1 | Example 2 |
|---|---|---|---|
| Composition of coating solution (% by mass) | Water | 11.41 | 22.33 |
| | Beef tallow | 81.50 | 63.80 |
| | Chicken extract | 3.26 | 6.38 |
| | Polyglycerin polyricinoleate | 0.57 | 1.12 |
| | Other additives | 3.26 | 6.38 |
| Total amount | | 100.00 | 100.00 |

In the granular pet foods 1 and 2 respectively obtained in Examples 1 and 2, a coating layer containing oils and fats was formed on the surface of a food granule and the coating solution was satisfactorily adhered to the surface of a food granule. Further, in the coating layer, a palatability enhancer was uniformly dispersed in the entire oils and fats.

Therefore, in the granular pet foods 1 and 2, the palatability enhancer uniformly adhered to each food granule without falling off from the food granule and satisfactory palatability was able to be obtained.

Hereinbefore, preferred examples of the present invention have been described, but the present invention is not limited thereto. Addition, omission, substitution, and other modifications of configurations are possible within the range not departing from the scope of the present invention. Further, the present invention is not limited by the description above and only limited by the range of claims.

## Claims

1. A method of producing granular pet food comprising:
a step of granulating food granules; and
a step of adhering a coating solution that contains water, oils and fats, a palatability enhancer, and an emulsifier to the food granules.

2. The method of producing granular pet food according to claim 1,
wherein the mass of oils and fats is greater than the mass of water in the coating solution, and
an HLB of the emulsifier is less than 8.

3. The method of producing granular pet food according to claim 1 or 2,
wherein the emulsifier contains polyglycerin ester.

4. The method of producing granular pet food according to claim 3,
wherein the polyglycerin ester is polyglycerin polyricinoleate.

5. The method of producing granular pet food according to any one of claims 1 to 4,
wherein the mass ratio of water to oils and fats in the coating solution is in a range of 1:2 to 1:10.

6. The method of producing granular pet food according to any one of claims 1 to 5,
wherein the hardness of water is 120 mg/L or less.

7. The method of producing granular pet food according to any one of claims 1 to 6, further comprising:
a step of adhering a powdery palatability enhancer to the food granules after the coating solution is adhered to the food granules.
